# EUROPEAN PATENT APPLICATION

(11) **EP 1 030 094 A2**
(43) Date of publication of application: **23.08.2000**
(21) Application number: 00301280.4
(22) Date of filing: 18.02.2000
(51) Int. Cl.: F16L 37/00, E21B 43/013

(54) **Remotely operable underwater connector assembly**

(30) Priority: 18.02.1999 GB 9903574
(71) Applicant: Rockwater Limited, Aberdeen AB12 3AX (GB)
(72) Inventor: Glennie, Allan, Stonehaven, Aberdeenshire AB39 3QL (GB)
(74) Representative: Allan, James Stewart

(57) **Abstract**

This invention relates to a system to connect two conduits or umbilicals typically by a remotely operated vehicle (ROV). The system uses typically annular reaction flanges on the members to be joined and a pair of yokes with U-shaped cutaways to cooperate with the flanges and pull them together so that a final connection can be made. The system can be used to connect a variety of tubulars and so allows the convenient assembly of different conduits in one area without the need for changing the tool or providing additional ROVs.

## Description

This invention relates to a connector system, particularly for connecting two conduits eg oil- or gas-carrying conduits or umbilicals.

The connection of subsea and surface oil or gas carrying conduits is an integral part of the production of hydrocarbons and, of course, also has great importance in many other industries. The connection of subsea conduits presents particular difficulties at depths beyond which divers can operate, and such connectors are frequently made up using remotely operated vehicles (ROVs) which are well known in the art. Many different kinds of connectors are currently in use in subsea connections, and require specific tooling to grasp and connect them. Therefore, an ROV propulsion unit is conventionally fitted with a specific connection tool to make up the particular connector being used on the pipeline etc. The ROV connection tool is a very large, complex and expensive piece of equipment, comprising a number of probes to facilitate docking of the ROV/tool with the connector, a winch to pull the parts of the connector together when making it up, and a motor, amongst other items.

It is a disadvantage of present systems that most connectors are tool-specific in that they can only be connected using a specific tool fitted to the ROV. This forces the architecture of a subsea field to have only one type of connector, or alternatively to change frequently the tool on the ROV, to suit different connectors or have more than one ROV operating different tools.

According to the present invention there is provided a connection system for connecting a first member to a second member, each member having at least one reaction shoulder by which force applied to the reaction shoulder is transferred to the respective member to move the member; and attachment means spanning between the members for attaching to one or more of the members.

The attachment means can comprise at least one clamp.

The connection system can be used to grasp the two members to be connected, manoeuvre them into a position suitable for the connection to be made up and can also incorporate connector tools to make up the connection.

The connection system of the invention is typically provided as an ROV tool and typically will allow positioning of the two members by the ROV so as to allow an ancillary connector (such as a clamp) or a connector tool (such as a spanner/manipulator for making up a bolted flange connection) on the ROV or provided integrally on the ROV tool to make up the connection after correct positioning.

The system preferably has alignment devices to facilitate bringing the members into alignment. The alignment devices can be eg one or more probes on one of the members which locate in one or more sockets on the other, and optionally can include tie lines and winches in one member or the other to draw the probe(s) into the socket(s).

The reaction shoulders can be simple upsets not extending radially around the members, or preferably annular flanges, so as to allow even distribution of force to the members. Each member can usefully be provided with two reaction shoulders so as to allow force to be applied to the member on different shoulders to move them in different directions.

One reaction flange or other shoulder can be provided on each of the members to be connected. The single reaction flange can be used to apply force to the members in two or more directions. However, a preferred embodiment has a pair of annular flanges arranged on each member which typically comprises a conduit having a throughbore. The flanges typically protrude around the outer surface of the conduit in each case.

The connection means can include a yoke (also called a saddle) which abuts the outer surface of a respective member, and which preferably has a cutout to accommodate the shape of the outer surface of the member. The saddle or yoke can incorporate a clamp device to clamp it to the member. The yoke is typically used to apply force to the reaction shoulders.

Preferably two yokes are provided, one for each member. The yokes may be connected by a frame which can be used to pull in and connect the yokes, and can allow or provide for movement of the yokes with respect to one another. The yokes preferably have a U- or horseshoe-shaped cutout to accommodate the member.

A preferred feature of the invention is that the same connection system on an ROV etc can be used to connect different members together, for example, a riser tail end to a manifold, or one tubular to another, by providing each of the members that are to be connected with reactions shoulders that can cooperate with the yokes of the connector system, so that the ROV does not have to carry one kind of connector tool for connecting the riser tail end to the manifold and another kind of connector tool for connecting the two tubulars together, and the same ROV and tool can be used with different kinds of terminal connectors.

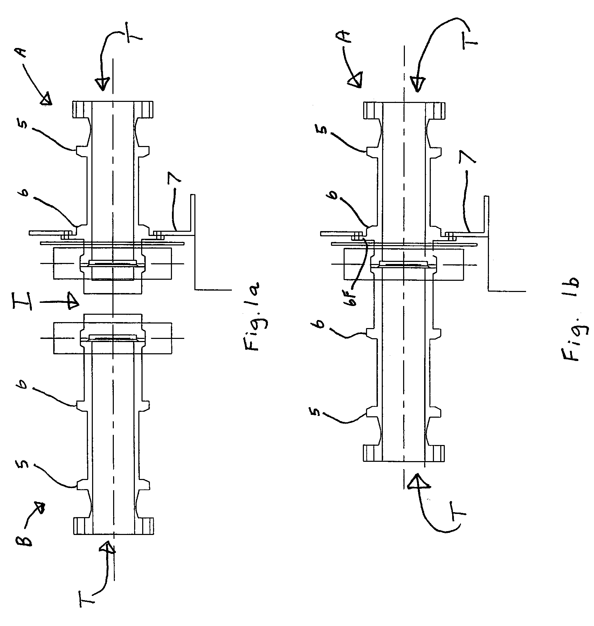

An embodiment of the present invention will now be described by way of example, and with reference to the accompanying drawings in which:-
Fig. 1 is a side view of two conduits having cotton reel formations thereon to be joined;

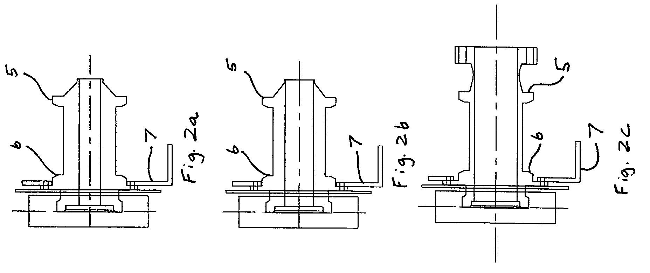

Fig. 2 shows a series of alternative conduits suitable for connecting with the present invention having different bore sizes;
Fig. 3 is a side view of made up connections between different types of conduit, connected by the present invention;
Fig. 4 is an end and plan view of a yoke assembly;
Fig. 5 is a series of views of a pull in tool of the connection system;
Fig. 6 is a series of views of a landing base of the present invention;
Fig. 7 is a side and end view of an ROV suitable for use with the connection system of the invention;
Fig. 8 is a side and end view of a pull in tool connected to the Fig. 7 ROV;
Fig. 9 is a detailed series of views of the Fig. 8 pull in and connect system;
Fig. 10 shows a modified version of the Fig. 8 tool being for connect only purposes;
Fig. 11 is a series of further views of the connect system of Fig. 9;

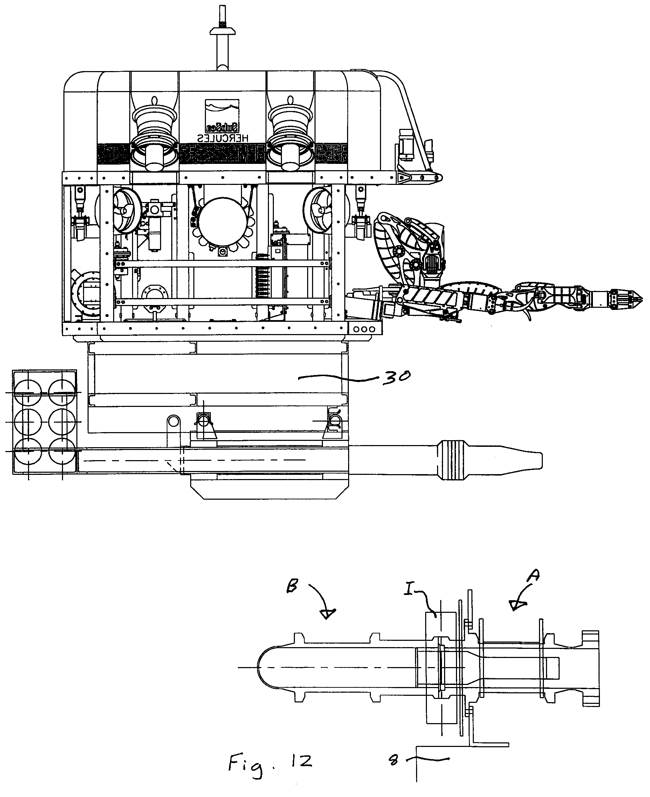

Fig. 12 is a side view of the ROV with connect system shown in Fig. 11 adjacent to a porch; and

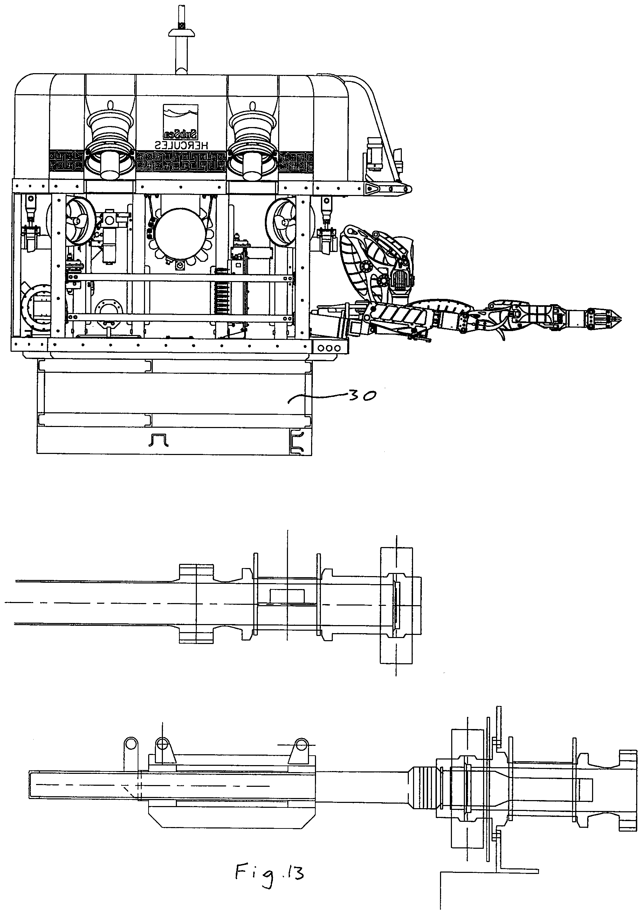

Fig. 13 is a further side view of the ROV of Fig.12.

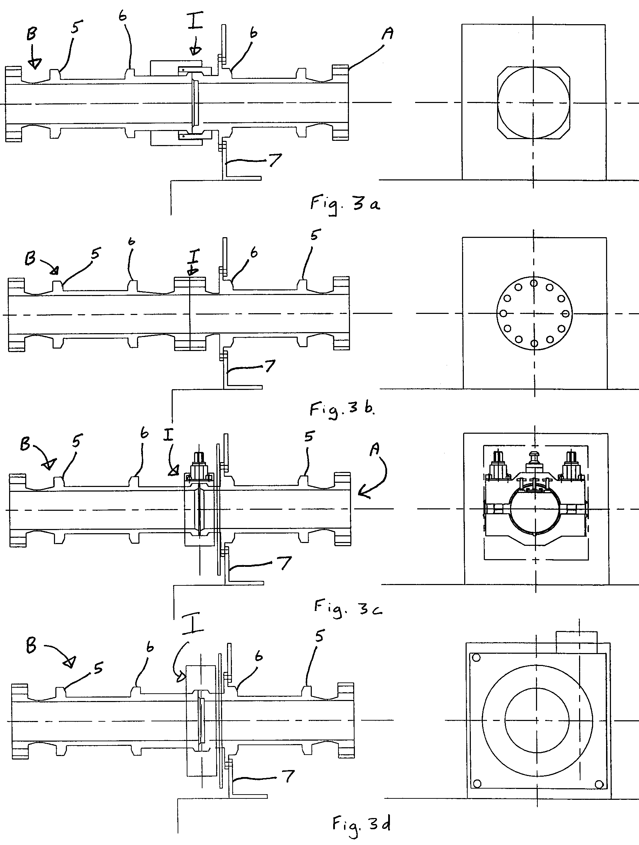

Referring now to the drawings, two tubulars A and B to be joined each have a throughbore T and an outer surface upon which annular reaction flanges 5 and 6 are spaced apart leaving an area of the outside diameter of the tubular between them. The annular flanges 5, 6 and the area 31 therebetween on each of the tubulars A and B provides a tooling interface for grasping and manipulation of the two tubulars A and B by an ROV tool to be described later. The annular flanges 5 and 6 on each of the inboard and outboard hubs A and B form a "cotton reel" structure with the area 31 between them. The connector interface I at the ends of the tubulars A and B can be of any desired type as illustrated in Fig. 3 which describes, by way of example a collet connector (a), a bolted flange connection (b), a clamp connector such as a DMaC clamp connector (c) or a GSR clamp connector (d). In each case, the throughbores T of each tubular A and B are aligned before the connection is made up at the interface I.

The tubular A can be on any subsea hardware items like manifolds or christmas trees, and the provision of the annular flanges 5 and 6 and the outer diameters of the tubulars A and B allow the manipulation of the tubulars A and B by an ROV tool which can be used with a variety of different connector types. Thus, the tooling on the ROV does not require to be specific for the whole of the connection system, but merely for the precise ancillary connectors or its tools for final making up (ie bolted flange etc) and this can in many cases be carried as a "bolt on" feature of the ROV rather than as a bespoke feature on the large and complex ROV tool.

The inboard assembly A will generally be fitted to a subsea structure such as a manifold or christmas tree etc, as the connection point for a diverless tie-in. The outboard assembly B is typically fitted to the end of a line to be connected to the structure such as a flexible flowing jumper, a riser tail end, steel pipelines or spoolpieces etc.

The terminal connector (of whatever type) can be supplied either with the tooling interface incorporated into the hub or flange forging, or the hubs or connector can be welded directly onto a separate tubing interface.

The inboard connector A can incorporate a further flange 6f for connection to a support bracket 7 to provide a mounting for the connector onto the porch 8 of a subsea structure, as well as a base to support other connector assembly component parts. This optional feature is sometimes required for some clamp connector assemblies currently available, and intended to be used with the connection system of the invention.

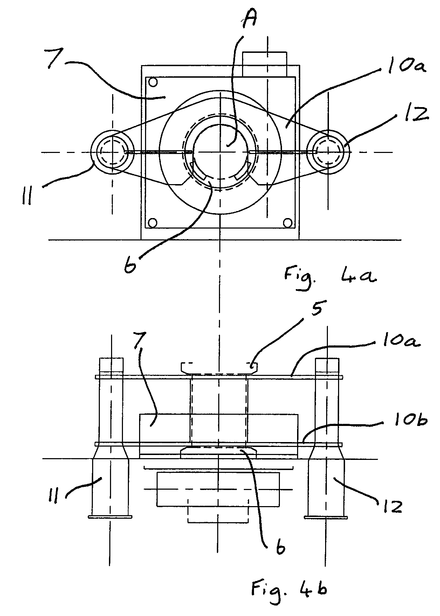

Fig. 4 shows an end and plan view of a yoke 10 connected to the cotton reel structure of an inboard hub shown in phantom in Fig. 4b. The yoke 10 has a pair of spaced-apart plates 10a and 10b having a horseshoe cutaway in which the area of the cotton reel between the annular flanges 5 and 6 is received. The plates 10a and 10b therefore abut against the inwardly opposing edges of annular flanges 5 and 6, and rest on the area of the outer diameter of the cotton reel between the annular flanges 5, 6. The plates 10a and 10b are connected by two outer receptacles 11 and 12 which are positioned clear of the connector support bracket 7, and provide a means to transfer the tie-in loads back to the cotton reel, as will be described later. The yoke 10 is locked in position by clamps mounted on the yoke 10 which close off the open end of the horseshoe cutaway, so that the force applied to the annular flanges 5 and 6 can be evenly distributed around their circumference. The receptacles 11 and 12 act as rope anchors for a pull in tool to be described later, and also provide a latching interface for the pull in tool probes.

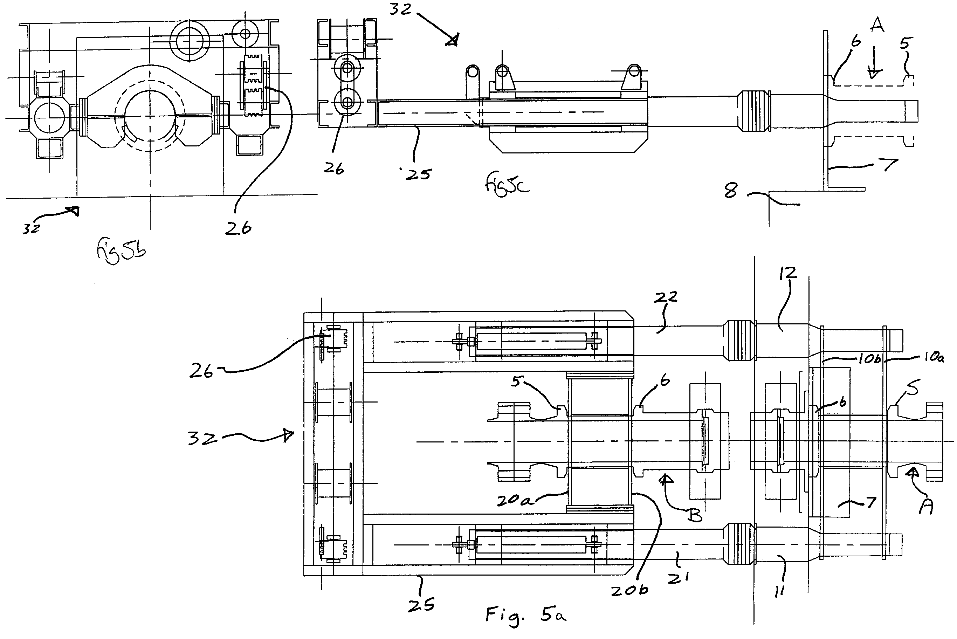

Fig. 5 discloses a pull in tool 32 used to pull in and connect flexible lines and jumpers which have been positioned on the sea bed in the vicinity of the subsea structure to be tied in. The same tool can also be used to deflect and connect rigid lines. The pull in tool can be connected to the underside of an ROV, and has a yoke assembly 20 similar to the inboard yoke 10 except that instead of receptacles 11 and 12, it has probes 21 and 22 which can be received in the receptacles 11 and 12 of the inboard yoke 10. The outboard yoke 20 is otherwise very similar, and like parts will not be described separately.

The probes 21 and 22 are attached to a frame 25 which incorporates a winch module 26. Ropes (not shown) extend from the winch module 26 through probes 22 and 21, receptacles 11 and 12, and are attached to latches (not shown) within the receptacles 11,12. In use, the ROV (with the pull-in tool 32 attached and with the probes 21 and 22 engaged in the receptacles 11 and 12 and the ropes winched in) flies to the porch 8 and locates the inboard yoke 10 on the cotton reel of the manifold A (or other such fixed structure). The yoke 10 is locked onto the inboard cotton reel, the probe latches are unlocked to disengage the probes 21,22 from the receptacles 11,12 and the winches pay out the rope as the ROV reverses back to position the outboard yoke 20 over the outboard cotton reel of the flexible line B to be tied in. The outboard yoke 20 is then located over and attached to the outboard cotton reel. The winch module 26 then pulls in the ropes and moves the entire assembly towards the inboard receptacles 11 and 12 with which they engage and this brings the end of the flexible line B adjacent to the end of the inboard manifold conduit A. The final connection is then completed with the particular connector (ie one chosen from Fig. 3 in accordance with what is on the final terminal of the conduits A and B). Once the final connection has been made up, the yokes 10 and 20 are released and the ROV manoeuvres the tool clear of the connector assemblies.

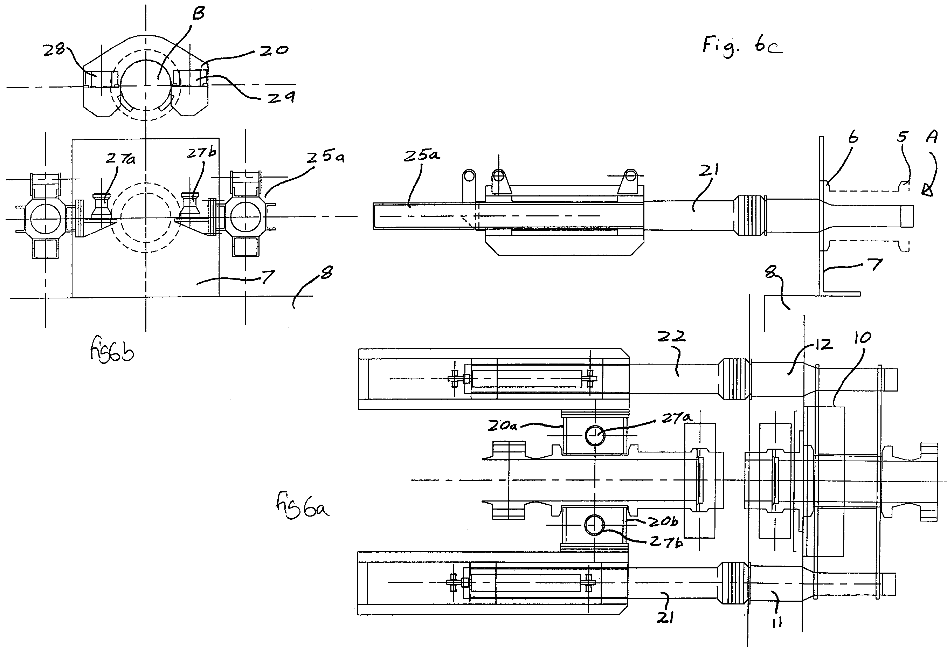

Fig. 6 shows a detailed view of a modified frame 25a similar to frame 25 but without the winch module 26 or attached outboard yoke 20 which is used as a platform to deploy the flexible or rigid line outboard connector assembly in position relative to the inboard connector assembly ready for the final connection operation. The frame 25a is also connected to the underside of an ROV.

The two probe assemblies can optionally be permanently attached to the inboard yoke assembly 10 as the probes 21 and 22 need not be removed from the inboard yoke receptacles 11 and 12. The ROV locates and clamps the yoke 10 onto the inboard connector assembly A on the cotton reel as with the pull in tool 32. The ROV then disengages from the frame 25a that is connected to the inboard assembly via receptacles 12,22 and probes 11,12; the frame 25a is then in position to accept the outboard connector assembly B. The outboard yoke 20 is detachable from the frame 25a. The yoke 20 is attached to the outboard cotton reel B eg on a rigid spoolpiece at the surface and is lowered e.g. via guide wires to the landing base frame 25a. The yoke 20 serves as a guidance and location aid for positioning the yoke assembly on the frame 25a. A pair of guide pegs 27a, 27b provided on the frame 25a and 22 locate the yoke 20 in the correct position by extending into apertures 28, 29 within the yoke 20. The guide pegs 27a, 27b can be attached to guide wires if that guidance system is being used.

Once the outboard yoke 20 has been attached to the frame 25a the ROV docks with the frame 25a, strokes the outboard cotton reel B forward and makes-up the connection. On completion of the tie-in the ROV disengages both yokes 10, 20 and manoeuvres the frame 25a clear of the structure.

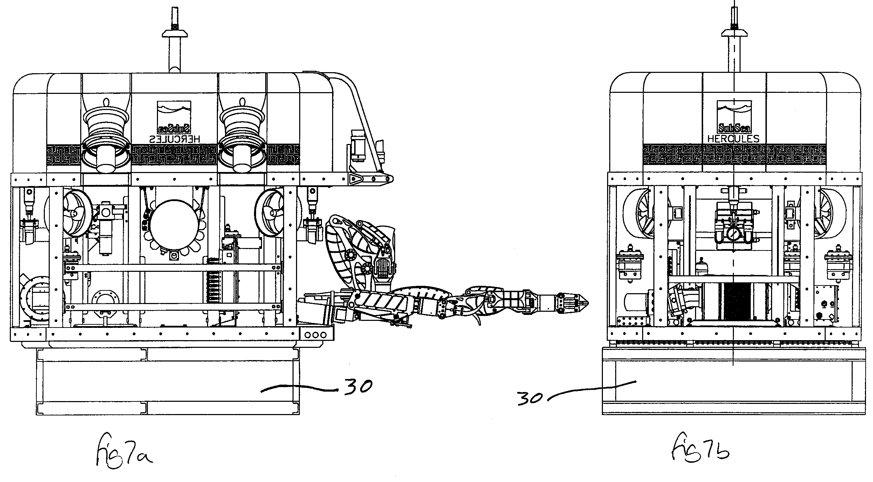

An interface skid 30 is attached to the underside of the ROV as shown in Fig. 7. The skid 30 contains the power and control equipment required to operate the tie-in system. The ROV and skid can connect to and/or disconnect from the pull in tool 32 and frame 25a by means of latches located in the skid 30. Ancillary tools required during the tie-in (such as connector make-up tools) can be stored in the front of the skid 30 for deployment by the ROV manipulator system.

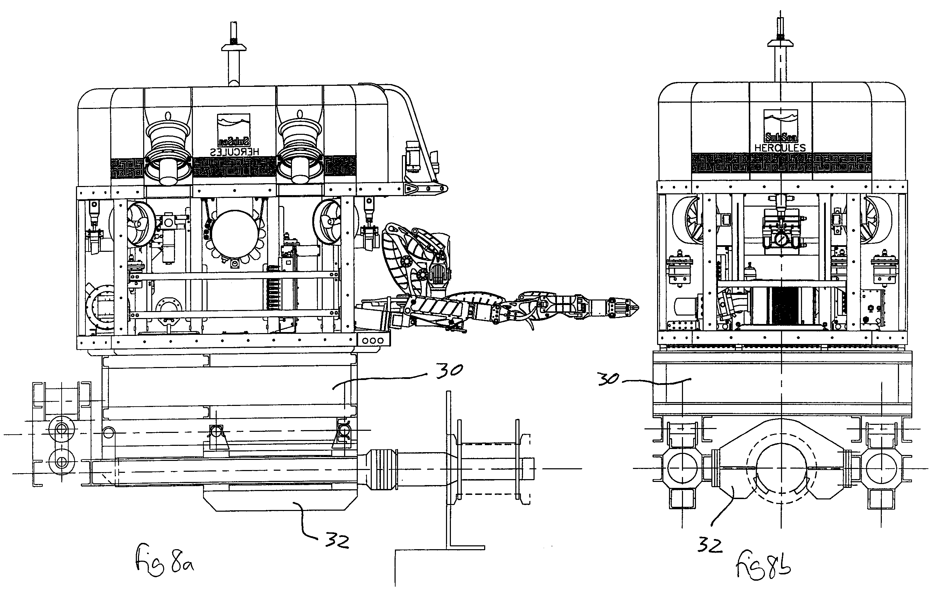

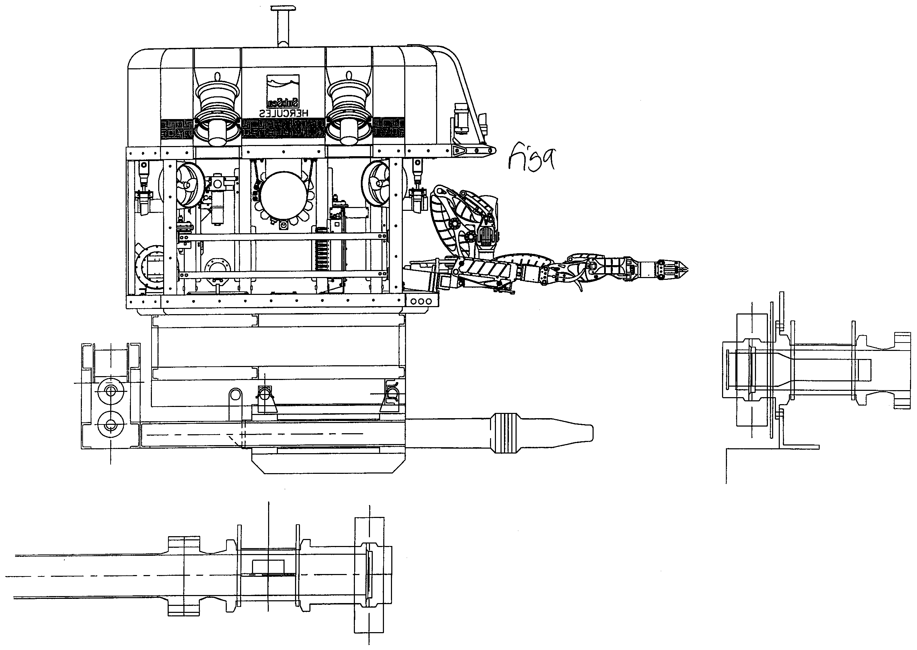

One embodiment of the connection system shown in Figs. 8 and 9 can be used for carrying out pull-in and connect or deflect to connect type subsea tie-ins. The end of the line or jumper to be connected is positioned some distance from the subsea tie-in structure. The end to be connected is fitted with the cotton reel outboard assembly and the structure with the mating inboard cotton reel assembly. The ROV manoeuvres the pull in tool to position the yoke 10 over the inboard cotton reel. This is locked in position, the probes 21, 22 disengaged from the yoke receptacles 11,12 and the pull in tool manoeuvred backwards until it is positioned over the outboard cotton reel. During this operation the pull in tool pays out on the winches while the ropes are attached to the yoke receptacles 11,12. The ROV manoeuvres the pull in tool until the yoke 20 is located on the outboard cotton reel B and locked in position. The pull in tool then winches the jumper or line end towards the inboard yoke 10 until the probes 21,22 are fully located in the inboard yoke receptacles 11,12. The probes 21,22 are locked to the receptacles and then stroked axially to bring the outboard member B forward until the two halves A and B can be engaged. The ROV then deploys ancillary tools with its manipulator or other bespoke tooling to make-up and test the completed connection. Both yokes 10, 20 are then unlocked and the pull in tool manoeuvred clear of the structure.

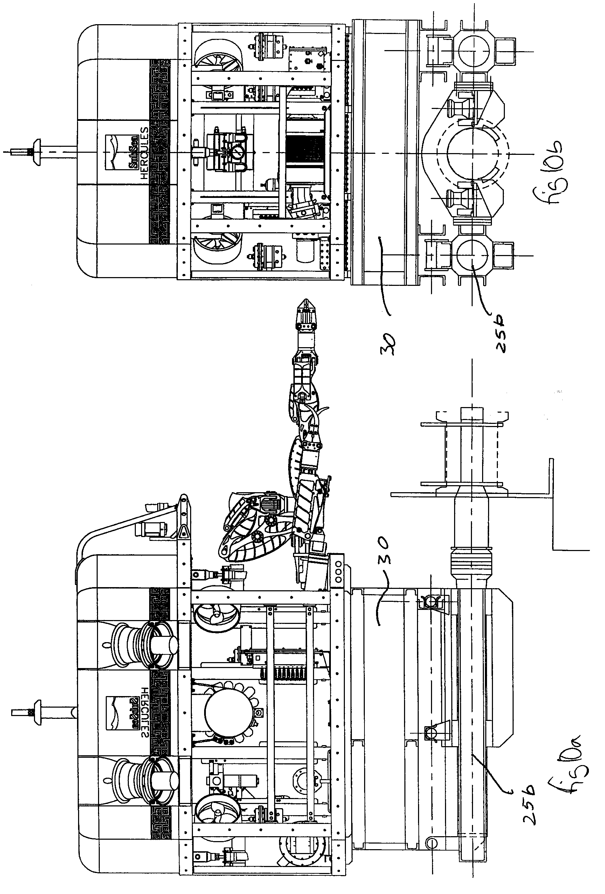

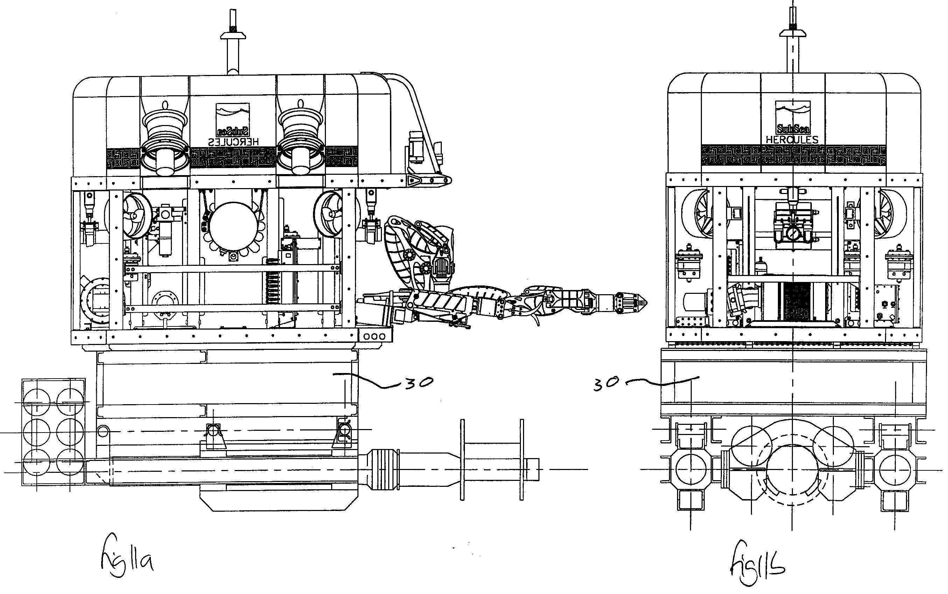

Another embodiment of the connection system shown in Figs. 10 and 11 uses the same basic modular tooling components as that used for the pull-in and connect system of Figs. 8 and 9, but the pull in tool is reconfigured as a landing base in the form of frame 25b.

The landing base frame 25b gives a platform on which to locate the outboard yoke 20 before connection. The landing base frame 25a is located onto the inboard cotton reel as per the pull in tool. The ROV then disengages from the landing base frame 25a. The outboard yoke 20 guides the end of the outboard tubular or line to be connected into position on the landing base frame 25a. This could be a rigid or flexible spoolpiece, or a single end positioned ready for connection. Once the outboard yoke 20 is located in the landing base the ROV redocks and axially strokes the probes 21,22 to bring the outboard member B forward until the two members A and B can be engaged. The rest of the operation is as described for the pull in tool.

Embodiments of the invention can be adapted for a diverless pull-in and connect type connection, similar to a DMaC system, or a connect only type system where the end to be connected has been positioned adjacent to its mating half and only a small axial displacement is required to complete the connection. The tie-in system tooling would be suitable for the connection of either flexible or rigid lines by either tie-in method.

Modifications and improvements can be incorporated without departing from the scope of the invention.

## Claims

1. A connection system for connecting a first member to a second member, each member having at least one reaction shoulder by which force applied to the reaction shoulder is transferred to the respective member to move the member; and attachment means spanning between the members for attaching the members to connect them together.

2. A system according to claim 1 wherein the attachment means comprises at least one clamp.

3. A system according to either preceding claim wherein each reaction shoulder extends around its respective member.

4. A system according to any preceding claim wherein each member has two reaction shoulders and an area between the reaction shoulders for attachment of the attachment means.

5. A system according to any preceding claim wherein the reaction shoulders are annular flanges.

6. A system according to any preceding claim wherein the members are underwater structures.

7. A system according to any preceding claim wherein the connection means comprises a yoke which can engage the outer surface of one or each member.

8. A system according to claim 7 wherein each member has a pair of reaction flanges and an attachment portion between each pair of reaction flanges, and wherein the yoke is adapted to engage the attachment portion of the or each member.

9. A system according to claim 7 or 8 having a pair of yokes connected by a frame to align the yokes when they are moved in relation to one another.

10. A system according to any one of the preceding claims, wherein having drive means to move the two members together for connection.
